# EUROPEAN PATENT APPLICATION

(11) **EP 4 801 020 A1**
(43) Date of publication of application: **02.09.2026**
(21) Application number: 25874132.1
(22) Date of filing: 24.09.2025
(51) Int. Cl.: H04M 1/02, G06F 1/16, H05K 5/02, H05K 5/06

(54) **ELECTRONIC DEVICE COMPRISING DISPLAY**

(30) Priority: 25.09.2024 KR 20240130120; 22.10.2024 KR 20240145116; 25.11.2024 KR 20240170135
(71) Applicant: Samsung Electronics Co., Ltd., Suwon-si, Gyeonggi-do 16677 (KR)
(72) Inventor: CHOI, Bongsuk, Suwon-si, Gyeonggi-do 16677 (KR); SHIM, Minchang, Suwon-si, Gyeonggi-do 16677 (KR)
(74) Representative: Gulde & Partner
(86) International application number: PCT/KR2025/014999
(87) International publication number: WO 2026/071717

(57) **Abstract**

An electronic device is provided. The electronic device includes a housing forming an exterior of the electronic device, the housing including a support structure, a display disposed at the housing, the display including a first surface facing the support structure, a plurality of adhesive tapes which are disposed between the first surface of the display and the support structure along an edge of the display, the plurality of adhesive tapes being spaced apart from each other, and an adhesive material, wherein each of one or more separation areas is defined between a first end portion of one of the plurality of adhesive tapes and a second end portion of another of the plurality of adhesive tapes adjacent thereto, wherein each of the one or more separation areas includes an application area in which the adhesive material is disposed, wherein at least one of the first end portion or the second end portion includes a notch, thereby forming the application area, and extension areas connected to a first side of the application area and a second side of the application area opposite to the first side, respectively, wherein the extension areas are defined by a portion of the first end portion and a portion of the second end portion.

## Description

### [Technical Field]

The present invention relates to a structure of an adhesive tape disposed on a rear surface of a display of a portable electronic device.

### [Background Art]

Due to advances in information communication technology and semiconductor technology, various functions are being integrated into a single portable electronic device. For example, an electronic device may implement not only a communication function, but also an entertainment function such as a game, a multimedia function such as music/video playback, a communication and security function for mobile banking, or a schedule management and electronic wallet function. Such an electronic device is becoming downsized to be conveniently carried by a user.

The above-described information may be provided as related art for the purpose of helping understanding of the disclosure. No assertion or determination is made as to whether any of the above-described contents may be applied as prior art related to the disclosure.

### [Detailed Description of the Invention]

### [Technical Solution]

According to an embodiment of the disclosure, an electronic device may be provided. The electronic device may include a housing forming an exterior of the electronic device and including a support structure disposed inside the electronic device, a display having a rectangular shape disposed in the housing and including a first surface visually exposed to an outside of the electronic device and a second surface which faces the support structure and is opposite to the first surface, a plurality of adhesive tapes disposed along an edge of the display on the second surface and attaching the second surface to the support structure, and an adhesive material disposed in the separation area. The plurality of adhesive tapes may be spaced apart from each other, and a separation area may be formed between a first end portion of one adhesive tape of the plurality of adhesive tapes and a second end portion of another adhesive member facing the first end portion. At least one of the first end portion or the second end portion may include a notch disposed in a central portion of the separation area and surrounding an application area in which the adhesive material is disposed. A portion of the first end portion and a portion of the second end portion may together form overflow prevention areas extending from one side and an opposite side of the application area and configured to receive a portion of the adhesive material when the second surface of the display is attached to the support structure.

According to an embodiment of the disclosure, an electronic device may be provided. The electronic device may include a housing forming an exterior of the electronic device and including a support structure disposed inside the electronic device, a display having a rectangular shape disposed in the housing and including a first surface visually exposed to an outside of the electronic device and a second surface which faces the support structure and is opposite to the first surface, a plurality of adhesive tapes disposed along an edge of the display on the second surface and attaching the second surface to the support structure, and an adhesive material disposed in the separation area. The plurality of adhesive tapes may be spaced apart from each other, and a separation area may be formed between a first end portion of one adhesive tape of the plurality of adhesive tapes and a second end portion of another adhesive member facing the first end portion. The first end portion and the second end portion may include a first notch and a second notch, respectively, disposed in a central portion of the separation area and together surrounding an application area in which the adhesive material is disposed.

### [Brief Description of Drawings]

FIG. 1 is a block diagram illustrating an electronic device in a network environment according to an embodiment of the disclosure.
FIG. 2 is a front exploded perspective view illustrating an electronic device according to an embodiment of the disclosure.
FIG. 3 is a rear exploded perspective view illustrating an electronic device according to an embodiment of the disclosure.
FIG. 4 is an exploded perspective view illustrating an electronic device according to an embodiment of the disclosure.
FIG. 5 is an exploded perspective view illustrating a rear surface of a display and adhesive tapes according to an embodiment of the disclosure.
FIG. 6A is a rear view illustrating a rear surface of a display and adhesive tapes disposed thereon according to an embodiment of the disclosure.
FIG. 6B is an enlarged view illustrating portion A of FIG. 6A illustrating a rear surface of a display on which a fiducial mark and adhesive tapes are disposed according to an embodiment of the disclosure.
FIG. 7A is a view illustrating a rear surface of a display on which a guide mark and adhesive tapes are disposed according to an embodiment of the disclosure.
FIG. 7B is a view illustrating a rear surface of a display on which a guide mark and adhesive tapes are disposed according to an embodiment of the disclosure.
FIG. 8A is a side view illustrating a state in which an adhesive material is disposed in an application area between adhesive tapes according to an embodiment of the disclosure.
FIG. 8B is a side view illustrating a state in which an adhesive tape and an adhesive material are covered with a support structure according to an embodiment of the disclosure.
FIG. 9 is a rear view illustrating end portions of adhesive tapes disposed on a rear surface of a display and an adhesive material according to an embodiment of the disclosure.
FIG. 10A is a side cross-sectional view taken along line B-B' of FIG. 9 according to an embodiment of the disclosure.
FIG. 10B is a side cross-sectional view taken along line B-B' of FIG. 9 illustrating a black layer and a fiducial mark formed on a rear surface of a display according to an embodiment of the disclosure.
FIG. 11 is views illustrating a process of bonding a rear surface of a display to an internal structure of an electronic device with an adhesive tape and an adhesive material according to an embodiment of the disclosure.
FIG. 12A is a view illustrating a rear surface of a display on which a fiducial mark and adhesive tapes are disposed according to an embodiment of the disclosure.
FIG. 12B is a view illustrating a rear surface of a display on which a fiducial mark and adhesive tapes are disposed according to an embodiment of the disclosure.
FIG. 12C is a view illustrating a rear surface of a display on which a fiducial mark and adhesive tapes are disposed according to an embodiment of the disclosure.

Throughout the accompanying drawings, like reference numerals may be allocated to like components, components, and/or structures.

### [Mode for Carrying out the Invention]

The following description taken in conjunction with the accompanying drawings is provided to aid a comprehensive understanding of various embodiments of the present invention as defined by the claims and equivalents thereto. The following description may include various specific details to aid understanding, but these should be considered exemplary only. Hence, it should be appreciated by one of ordinary skill in the art that various changes or modifications may be made to various embodiments of the disclosure without departing from the spirit or scope of the disclosure. Further, descriptions of well-known functions and configurations may be omitted for clarity and conciseness.

The terms and words used in the following description and claims are not limited to the dictionary meaning, but are used only by the inventors to enable a clear and consistent understanding of the disclosure. Accordingly, it will be apparent to one of ordinary skill in the art that the following description of various embodiments of the present invention is provided by way of example only and not to limit the present invention as defined by the appended claims and equivalents thereto.

The singular forms "a", "an" and "the" should be understood to include plural referents unless the context clearly dictates otherwise. Thus, e.g., reference to "a component surface" includes reference to one or more of such surfaces.

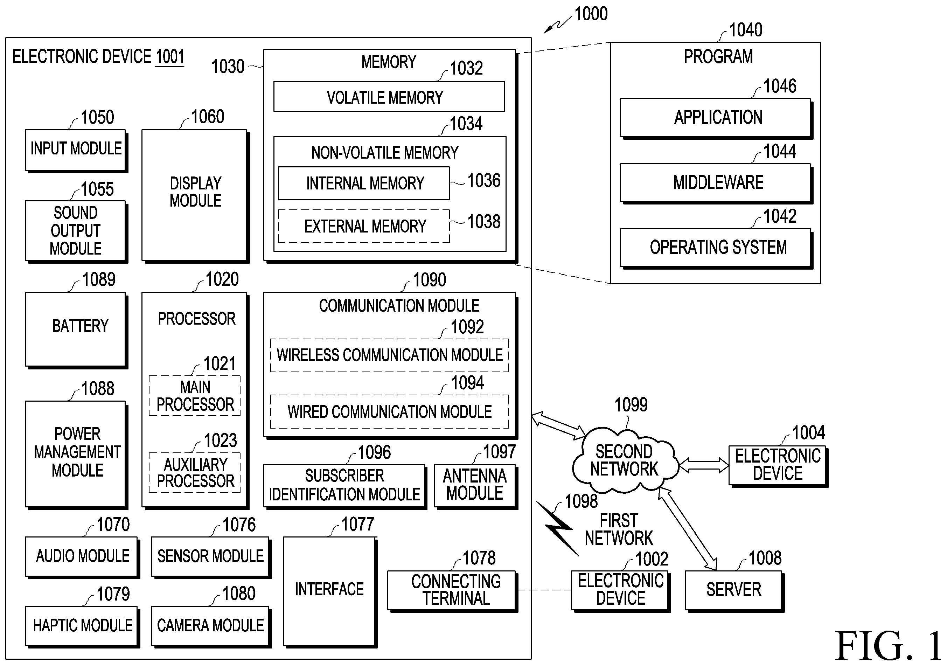

FIG. 1 is a block diagram illustrating an electronic device in a network environment according to an embodiment of the disclosure.

Referring to FIG. 1, in the network environment 100, the electronic device 101 may communicate with an electronic device 102 through a first network 198 (e.g., a short-range wireless communication network), or may communicate with an electronic device 104 or a server 108 through a second network 199 (e.g., a long-range wireless communication network). According to an embodiment, the electronic device 101 may communicate with the electronic device 104 through the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module 196, or an antenna module 197. In an embodiment, at least one of these components (e.g., the connecting terminal 178) may be omitted from the electronic device 101, or one or more other components may be added. In an embodiment, some of these components (e.g., the sensor module 176, the camera module 180, or the antenna module 197) may be integrated into one component (e.g., the display module 160).

The processor 120 may, e.g., execute software (e.g., a program 140) to control at least one other component (e.g., a hardware or software component) of the electronic device 101 connected to the processor 120, and may perform various data processing or operations. According to an embodiment, as at least part of data processing or operation, the processor 120 may store a command or data received from another component (e.g., the sensor module 176 or the communication module 190) in a volatile memory 132, process the command or data stored in the volatile memory 132, and store result data in a non-volatile memory 134. According to an embodiment, the processor 120 may include a main processor 121 (e.g., a central processing unit or an application processor) or an auxiliary processor 123 (e.g., a graphics processing unit, a neural processing unit (NPU), an image signal processor, a sensor hub processor, or a communication processor) that is operable independently of or together with the main processor 121. For example, when the electronic device 101 includes the main processor 121 and the auxiliary processor 123, the auxiliary processor 123 may be configured to use lower power than the main processor 121 or to be specialized for a designated function. The auxiliary processor 123 may be implemented separately from, or as part of, the main processor 121.

The auxiliary processor 123 may, e.g., control at least some of functions or states related to at least one component (e.g., the display module 160, the sensor module 176, or the communication module 190) among the components of the electronic device 101, on behalf of the main processor 121 while the main processor 121 is in an inactive (e.g., sleep) state, or together with the main processor 121 while the main processor 121 is in an active (e.g., application execution) state. According to an embodiment, the auxiliary processor 123 (e.g., an image signal processor or a communication processor) may be implemented as part of another component (e.g., the camera module 180 or the communication module 190) that is functionally related. According to an embodiment, the auxiliary processor 123 (e.g., a neural processing unit) may include a hardware structure specialized for processing of an artificial intelligence model. An artificial intelligence model may be generated through machine learning. Such learning may be performed, e.g., in the electronic device 101 itself on which the artificial intelligence model is performed, or may be performed through a separate server (e.g., the server 108). A learning algorithm may include, e.g., supervised learning, unsupervised learning, semi-supervised learning, or reinforcement learning, but is not limited to the above-described examples. An artificial intelligence model may include a plurality of artificial neural network layers. The artificial neural network may be one of a deep neural network (DNN), a convolutional neural network (CNN), a recurrent neural network (RNN), a restricted Boltzmann machine (RBM), a deep belief network (DBN), a bi-directional recurrent deep neural network (BRDNN), deep Q-networks, or a combination of two or more thereof, but is not limited to the foregoing examples. The artificial intelligence model may include, additionally or alternatively, a software structure in addition to a hardware structure.

The memory 130 may store various data used by at least one component of the electronic device 101 (e.g., the processor 120 or the sensor module 176). The data may include, e.g., software (e.g., the program 140) and input data or output data for instructions related thereto. The memory 130 may include a volatile memory 132 or a non-volatile memory 134.

The program 140 may be stored as software in the memory 130 and may include, e.g., an operating system 142, middleware 144, or an application 146.

The input module 150 may receive an instruction or data to be used by a component of the electronic device 101 (e.g., the processor 120) from outside of the electronic device 101 (e.g., a user). The input module 150 may include, e.g., a microphone, a mouse, a keyboard, a key (e.g., a button), or a digital pen (e.g., a stylus pen).

The sound output module 155 may output a sound signal to outside of the electronic device 101. The sound output module 155 may include, e.g., a speaker or a receiver. The speaker may be used for general purposes such as multimedia playback or recording playback. The receiver may be used for receiving an incoming call. According to an embodiment, the receiver may be implemented separately from, or as part of, the speaker.

The display module 160 may visually provide information to outside of the electronic device 101 (e.g., a user). The display module 160 may include, e.g., a display, a hologram device, or a projector, and a control circuit for controlling the device. According to an embodiment, the display module 160 may include a touch sensor configured to detect a touch, or a pressure sensor configured to measure an intensity of a force generated by the touch.

The audio module 170 may convert a sound into an electrical signal, or conversely, convert an electrical signal into a sound. According to an embodiment, the audio module 170 may obtain a sound through the input module 150, or may output a sound through the sound output module 155 or an external electronic device (e.g., the electronic device 102) (e.g., a speaker or a headphone) directly or wirelessly connected to the electronic device 101.

The sensor module 176 may detect an operational state (e.g., power or temperature) of the electronic device 101 or an environmental state (e.g., a user state) external to the electronic device 101, and generate an electrical signal or data value corresponding to the detected state. According to an embodiment, the sensor module 176 may include, e.g., a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols that may be used for the electronic device 101 to be directly or wirelessly connected to an external electronic device (e.g., the electronic device 102). According to an embodiment, the interface 177 may include, e.g., a high definition multimedia interface (HDMI), a universal serial bus (USB) interface, an SD card interface, or an audio interface.

The connecting terminal 178 may include a connector through which the electronic device 101 may be physically connected to an external electronic device (e.g., the electronic device 102). According to an embodiment, the connecting terminal 178 may include, e.g., an HDMI connector, a USB connector, an SD card connector, or an audio connector (e.g., a headphone connector).

The haptic module 179 may convert an electrical signal into a mechanical stimulus (e.g., vibration or movement) or an electrical stimulus that a user may perceive through a tactile sensation or a kinesthetic sensation. According to an embodiment, the haptic module 179 may include, e.g., a motor, a piezoelectric element, or an electrical stimulation device.

The camera module 180 may capture a still image and a video. According to an embodiment, the camera module 180 may include one or more lenses, image sensors, image signal processors, or flashes.

The power management module 188 may manage power supplied to the electronic device 101. According to an embodiment, the power management module 188 may be implemented as, e.g., at least part of a power management integrated circuit (PMIC).

The battery 189 may supply power to at least one component of the electronic device 101. According to an embodiment, the battery 189 may include, e.g., a non-rechargeable primary cell, a rechargeable secondary cell, or a fuel cell.

The communication module 190 may support establishing a direct (e.g., wired) communication channel or a wireless communication channel between the electronic device 101 and an external electronic device (e.g., the electronic device 102, the electronic device 104, or the server 108), and performing communication through the established communication channel. The communication module 190 may include one or more communication processors that operate independently from the processor 120 (e.g., an application processor) and support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication module). A corresponding communication module among these communication modules may communicate with the external electronic device 104 through a first network 198 (e.g., a short-range communication network such as Bluetooth, wireless fidelity (Wi-Fi) direct, or infrared data association (IrDA)) or a second network 199 (e.g., a long-range communication network such as a legacy cellular network, a 5G network, a next-generation communication network, the Internet, or a computer network (e.g., a LAN or a WAN)). These various types of communication modules may be integrated into a single component (e.g., a single chip) or may be implemented as a plurality of separate components (e.g., a plurality of chips). The wireless communication module 192 may identify or authenticate the electronic device 101 within a communication network such as the first network 198 or the second network 199 using subscriber information (e.g., international mobile subscriber identity (IMSI)) stored in a subscriber identification module 196.

The wireless communication module 192 may support a 5G network after a 4G network and next-generation communication technology, e.g., new radio access technology (NR access technology). The NR access technology may support high-speed transmission of high-capacity data (enhanced mobile broadband (eMBB)), minimization of terminal power and access of multiple terminals (massive machine type communications (mMTC)), or high reliability and low latency (ultra-reliable and low-latency communications (URLLC)). The wireless communication module 192 may support a high-frequency band (e.g., a mmWave band), e.g., for achieving a high data transmission rate. The wireless communication module 192 may support various technologies for securing performance in the high-frequency band, e.g., technologies such as beamforming, massive multiple-input and multiple-output (massive MIMO), full dimensional MIMO (FD-MIMO), array antenna, analog beam-forming, or large scale antenna. The wireless communication module 192 may support various requirements specified by the electronic device 101, an external electronic device (e.g., the electronic device 104), or a network system (e.g., the second network 199). According to an embodiment, the wireless communication module 192 may support a peak data rate (e.g., 20 Gbps or more) for eMBB realization, loss coverage (e.g., 164 dB or less) for mMTC realization, or U-plane latency (e.g., 0.5 ms or less for each of downlink (DL) and uplink (UL), or round trip 1 ms or less) for URLLC realization.

The antenna module 197 may transmit a signal or power to an external source (e.g., an external electronic device) or receive a signal or power from an external source. According to an embodiment, the antenna module 197 may include an antenna including a radiator formed of a conductor or a conductive pattern formed on a substrate (e.g., a PCB). According to an embodiment, the antenna module 197 may include a plurality of antennas (e.g., an array antenna). In this case, at least one antenna suitable for a communication scheme used in a communication network such as the first network 198 or the second network 199 may be selected from the plurality of antennas by, e.g., the communication module 190. A signal or power may be transmitted or received between the communication module 190 and an external electronic device through the selected at least one antenna. According to an embodiment, another component (e.g., a radio frequency integrated circuit (RFIC)) in addition to the radiator may be additionally formed as part of the antenna module 197.

According to an embodiment, the antenna module 197 may form a mmWave antenna module. According to an embodiment, the mmWave antenna module may include a printed circuit board, an RFIC disposed on or adjacent to a first surface (e.g., a lower surface) of the printed circuit board and capable of supporting a designated high-frequency band (e.g., a mmWave band), and a plurality of antennas (e.g., an array antenna) disposed on or adjacent to a second surface (e.g., an upper surface or a side surface) of the printed circuit board and capable of transmitting or receiving a signal of the designated high-frequency band.

At least some of the components may be connected to each other through a communication scheme between peripheral devices (e.g., a bus, general purpose input and output (GPIO), serial peripheral interface (SPI), or mobile industry processor interface (MIPI)) and may exchange a signal (e.g., a command or data) with each other.

According to an embodiment, a command or data may be transmitted or received between the electronic device 101 and the external electronic device 104 through a server 108 connected to the second network 199. Each of the external electronic devices 102 or 104 may be a device of the same type as or a different type from the electronic device 101. According to an embodiment, all or some of operations executed in the electronic device 101 may be executed in one or more external electronic devices among the external electronic devices 102, 104, or 108. For example, when the electronic device 101 is required to perform a predetermined function or service automatically or in response to a request from a user or another device, the electronic device 101 may request one or more external electronic devices to perform at least part of the function or the service instead of, or in addition to, executing the function or service by itself. The one or more external electronic devices that receive the request may execute at least part of the requested function or service, or an additional function or service related to the request, and may transmit a result of the execution to the electronic device 101. The electronic device 101 may provide the result, as it is or after additionally processing the result, as at least part of a response to the request. For this purpose, e.g., cloud computing, distributed computing, mobile edge computing (MEC), or client-server computing technology may be used. The electronic device 101 may provide ultralow latency services using, e.g., distributed computing or mobile edge computing. In an embodiment, the external electronic device 104 may include an internet of things (IoT) device. The server 108 may be an intelligent server using machine learning and/or neural networks. According to an embodiment, the external electronic device 104 or the server 108 may be included in the second network 199. The electronic device 101 may be applied to intelligent services (e.g., smart home, smart city, smart car, or healthcare) based on 5G communication technology and IoT-related technology.

In the following detailed description, a length direction, a width direction and/or a thickness direction of the electronic device may be mentioned, and the length direction may be defined as a 'Y--axis direction', the width direction as an 'X--axis direction', and/or the thickness direction as a 'Z--axis direction'. In an embodiment, with respect to a direction toward which a component is oriented, 'negative/positive (-/+)' may be mentioned together with the Cartesian coordinate system illustrated in the drawings. For example, a front surface of the electronic device or the housing may be defined as 'a surface facing the +Z direction', and a rear surface may be defined as 'a surface facing the -Z direction'. In an embodiment, a side surface of the electronic device or the housing may include an area facing the +X direction, an area facing the +Y direction, an area facing the - X direction, and/or an area facing the -Y direction. Further, in an embodiment, 'the X--axis direction' may mean including both the '-X direction' and the '+X direction'. This is with respect to the Cartesian coordinate system illustrated in the drawings for brevity of description, and it is noted that the description of such directions or components does not limit an embodiment of the disclosure. For example, according to whether the electronic device is in an unfolded state or a folded state, a direction toward which the above-described front surface or rear surface faces may vary, and the above-described directions may be interpreted differently according to a user's gripping habit.

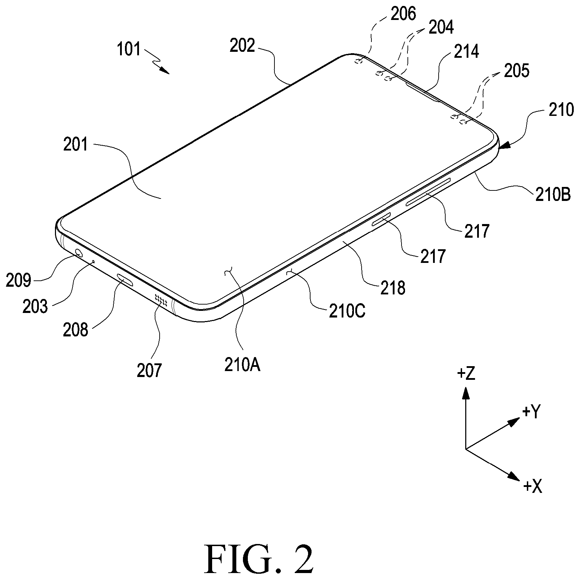

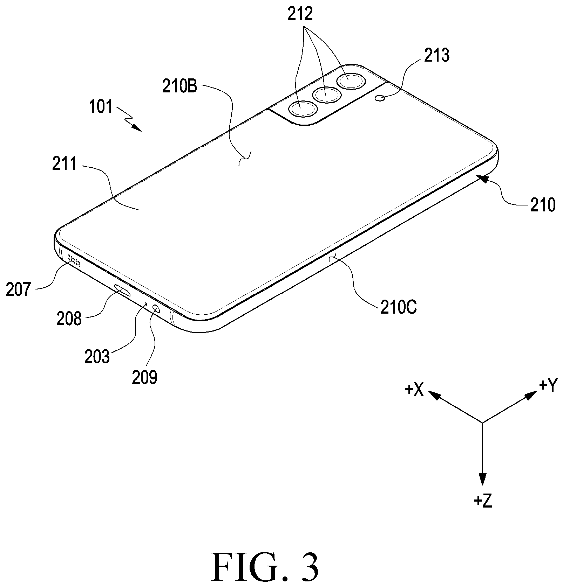

FIG. 2 is a perspective view illustrating a front surface of an electronic device according to an embodiment of the disclosure. FIG. 3 is a perspective view illustrating a rear surface of the electronic device illustrated in FIG. 2 according to an embodiment of the disclosure. A configuration of the electronic device 101 of FIGS. 2 and 3 may be the same as all or part of the configuration of the electronic device 101 of FIG. 1.

Referring to FIGS. 2 and 3, an electronic device 101 according to an embodiment may include a housing 210 including a first surface (or front surface) 210A, a second surface (or rear surface) 210B, and a side surface 210C surrounding a space between the first surface 210A and the second surface 210B. In an embodiment (not illustrated), the housing 210 may refer to a structure forming some of the first surface 210A of FIG. 2, the second surface 210B of FIG. 3, and the side surfaces 210C. According to an embodiment, the first surface 210A may be formed by a front plate 202 (e.g., a glass plate including various coating layers, or a polymer plate) at least a portion of which is substantially transparent. The second surface 210B may be formed by a substantially opaque rear plate 211. The rear plate 211 may be formed by, e.g., coated or tinted glass, ceramic, polymer, metal (e.g., aluminum, stainless steel (STS), or magnesium), or a combination of at least two of the above materials. The side surface 210C may be formed by a side structure (or "side bezel structure") 218 that is coupled with the front plate 202 and the rear plate 211 and includes metal and/or polymer. In an embodiment, the rear plate 211 and the side structure 218 may be integrally formed and include the same material (e.g., a metal material such as aluminum).

Although not illustrated, the front plate 202 may include area(s) bent toward the rear plate 211 and seamlessly extended at least at a portion of an edge. In an embodiment, the front plate 202 (or the rear plate 211) may include only one of the areas bent and extended toward the rear plate 211 (or the front plate 202), at one edge of the first surface 210A. According to an embodiment, the front plate 202 or the rear plate 211 may have a substantially flat plate shape, and in this case, may not include a bent and extended area. In case that the bent and extended area is included, a thickness of the electronic device 101 at a portion including the bent and extended area may be smaller than a thickness of another portion.

According to an embodiment, the electronic device 101 may include one or more of a display 201, an audio module (not illustrated) (e.g., audio module 170 of FIG. 1) including at least one sound hole 203, 207, 214, a sensor module 204 (e.g., the sensor module 176 of FIG. 1), a camera module 205, 212, 213 (e.g., the camera module 180 of FIG. 1), a key input device 217 (e.g., the input module 150 of FIG. 1), or a connector hole 208, 209 (e.g., the connecting terminal 178 of FIG. 1). In an embodiment, the electronic device 101 may omit at least one of the components (e.g., the key input device 217, or the light emitting element 206) or may additionally include another component.

According to an embodiment, the display 201 may be visually exposed through, e.g., a substantial portion of the front plate 202. In an embodiment, at least a portion of the display 201 may be visually exposed through the front plate 202 forming the first surface 210A or through a portion of the side surface 210C. In an embodiment, a corner of the display 201 may be formed to be generally identical to an adjacent outer shape of the front plate 202. In an embodiment (not illustrated), in order to expand an area where the display 201 is visually exposed, a gap between an outer edge of the display 201 and an outer edge of the front plate 202 may be formed to be generally identical.

In an embodiment (not illustrated), a recess or an opening may be formed in a portion of a screen display area of the display 201, and at least one or more of a sound hole 214, a sensor module 204, a camera module 205, and a light emitting element 206 aligned with the recess or the opening may be included. In an embodiment (not illustrated), at least one or more of a sound hole 214, a sensor module 204, a camera module 205, a fingerprint sensor (not illustrated), and a light emitting element 206 may be included on a rear surface of the screen display area of the display 201. In an embodiment (not illustrated), the display 201 may be coupled with or disposed adjacent to a touch sensing circuit, a pressure sensor capable of measuring an intensity (pressure) of a touch, and/or a digitizer for detecting a magnetic-type stylus pen. In an embodiment, at least a portion of the sensor module 204 and/or at least a portion of the key input device 217 may be disposed on the side surface 210C.

According to an embodiment, the audio module (not illustrated) may include a microphone hole 203 and a sound hole 207, 214. A microphone for acquiring external sound may be disposed inside the microphone hole 203, and in an embodiment, a plurality of microphones may be disposed so as to sense a direction of the sound. According to an embodiment, the sound hole 207, 214 may include an external sound hole 207 and a call receiver hole 214. In an embodiment, the sound hole 207, 214 and the microphone hole 203 may be implemented as a single hole, or a speaker may be included in the audio module without the sound hole 207, 214 (e.g., a piezo speaker).

According to an embodiment, the sensor module 204 may generate an electrical signal or a data value corresponding to an internal operation state of the electronic device 101 or an external environmental state. The sensor module 204 may include, e.g., a first sensor module 204 (e.g., a proximity sensor) disposed on the first surface 210A of the housing 210 and/or a second sensor module (not illustrated) (e.g., a fingerprint sensor). According to an embodiment, an additional sensor module disposed on the second surface 210B of the housing 210 may be disposed. The fingerprint sensor (not illustrated) may be disposed on the first surface 210A (e.g., the display 201) of the housing 210 as well as the second surface 210B or the side surface 210C. The electronic device 101 may further include, e.g., at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera module 205, 212, 213 may include a first camera module 205 facing the first surface 210A of the electronic device 101, and a second camera module 212 and/or a flash 213 facing the second surface 210B. For example, the first camera module 205 and/or the second camera module 212 may include one or more lenses, an image sensor, and/or an image signal processor. According to an embodiment, some camera module 205 of the camera modules 205, 212 and/or some sensor module (e.g., the sensor module 204) may be disposed to be exposed to the outside through at least a portion of the display 201. According to an embodiment, the first camera module 205 may include a punch hole camera disposed inside a hole or a recess formed on a rear surface of the display 201. For example, the first camera module 205 may receive at least a portion of light incident toward the first surface 210A (or front surface) of the electronic device 101 through the display 201 from an interior of the electronic device 101. According to an embodiment, the first camera module 205 and/or the sensor module 204 may be disposed to contact an external environment through a transparent area up to the front plate 202 of the display 201, in an interior space of the electronic device 101. Further, some sensor module 204 may be disposed to perform its function without being visually exposed through the front plate 202 from the interior space of the electronic device.

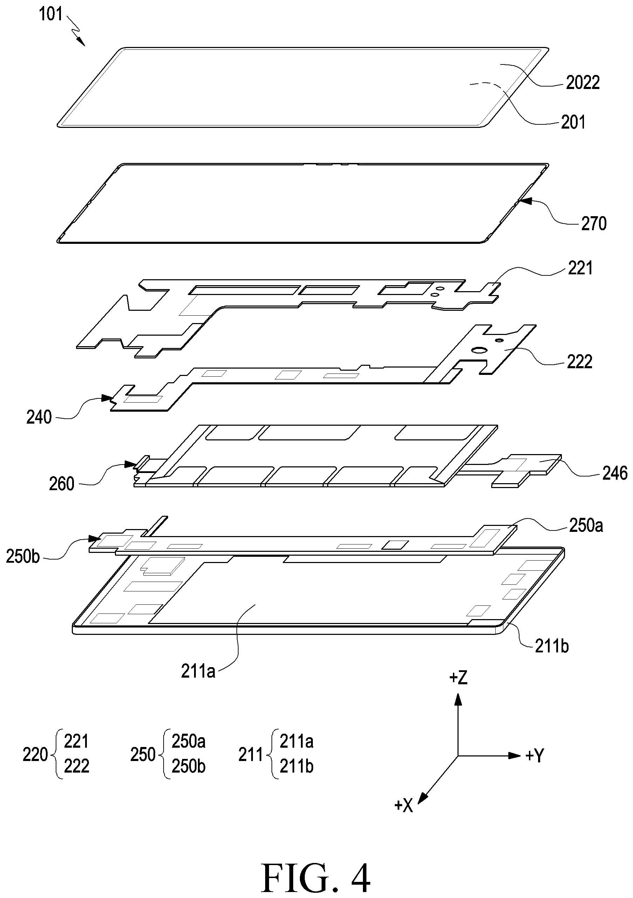

According to an embodiment, the second camera module 212 may be disposed inside the housing 210 such that a lens is exposed to the second surface 210B (or rear surface) of the electronic device 101. For example, the camera module 212 may be electrically connected to a printed circuit board (e.g., the board assembly 240 of FIG. 4). For example, the flash 213 may include a light emitting diode or a xenon lamp. In an embodiment, one or more lenses (an infrared camera, a wide-angle lens and a telephoto lens) and image sensors may be disposed on one surface of the electronic device 101. In an embodiment, the flash 213 may emit infrared light. For example, infrared light emitted from the flash 213 and reflected by a subject may be received through a sensor module (not illustrated) disposed on the second surface 210B of the housing 210. The electronic device 101 or a processor (e.g., the processor 120 of FIG. 1) may detect depth information of the subject based on the time when the infrared light is received at the sensor module.

The camera module 205, 212, 213 is not limited to the above structure, and may be variously modified in design, such as only some camera modules being mounted or a new camera module being added, according to a structure of the electronic device 101.

According to an embodiment, the electronic device 101 may include a plurality of camera modules (e.g., a dual camera or a triple camera) each having different attributes (e.g., angle of view) or functions. For example, a plurality of camera modules 205, 212 including lenses having different angles of view may be configured, and the electronic device 101 may control to change an angle of view of the camera module 205, 212 performed in the electronic device 101 based on a user's selection. For example, at least one of the plurality of camera modules 205, 212 may be a wide-angle camera, and at least another one may be a telephoto camera. Similarly, at least one of the plurality of camera modules 205, 212 may be a front camera, and at least another one may be a rear camera. Further, the plurality of camera modules 205, 212 may include at least one of a wide-angle camera, a telephoto camera, or an IR camera (e.g., a time of flight (TOF) camera, a structured light camera). According to an embodiment, the IR camera may be operated as at least a portion of the sensor module. For example, the TOF camera may be operated as at least a portion of a sensor module (not illustrated) for sensing a distance to a subject.

According to an embodiment, the key input device 217 may be disposed on the side surface 210C of the housing 210. In an embodiment, the electronic device 101 may not include some or all of the above-described key input device 217, and the key input device 217 that is not included may be implemented in another form such as a soft key on the display 201. In an embodiment, the key input device may include a sensor module disposed on the second surface 210B of the housing 210.

According to an embodiment, the light emitting element 206 may be disposed on, e.g., the first surface 210A of the housing 210. The light emitting element 206 may provide, e.g., state information of the electronic device 101 in a light form. In an embodiment, the light emitting element 206 may provide, e.g., a light source linked with a process of the camera module 205. The light emitting element 206 may include, e.g., an LED, an IR LED, and a xenon lamp.

According to an embodiment, the connector hole 208, 209 may include a first connector hole 208 capable of receiving a connector (e.g., a USB connector) for transmitting/receiving power and/or data with an external electronic device, and/or a second connector hole (e.g., an earphone jack) 209 capable of receiving a connector for transmitting/receiving an audio signal with an external electronic device.

FIG. 4 is an exploded perspective view illustrating an electronic device according to an embodiment of the disclosure.

Referring to FIG. 4, an electronic device 101 (e.g., the electronic device 101 of FIG. 1 and/or the electronic device 101 of FIG. 2 or FIG. 3) may include a display 201 (e.g., the display 201 of FIG. 2), a front plate 202 (e.g., the front plate 202 of FIG. 2), a first support structure 220 (e.g., a bracket), a board assembly 240, a rear plate 211 (e.g., the rear plate 211 of FIG. 3), a battery 260 (e.g., the battery 189 of FIG. 1), a rear case 250, an antenna (not illustrated) (e.g., antenna module 197 of FIG. 1), and/or a camera module (not illustrated) (e.g., the camera module 180 of FIG. 1). According to an embodiment, when including a plurality of printed circuit boards 240, the electronic device 101 may electrically connect different printed circuit boards by including at least one flexible printed circuit board. For example, the board assembly 240 may include a first circuit board 240a disposed on an upper side (e.g., +Y--axis direction) of the battery 260 and a second circuit board 240b disposed on a lower side (e.g., -Y--axis direction), and the flexible printed circuit board may electrically connect the first circuit board 240a and the second circuit board 240b. According to an embodiment, the electronic device 101 may omit at least one of the components (e.g., the rear case 250) or may additionally include another component. At least one of the components of the electronic device 101 may be identical or similar to at least one of the components of the electronic device 101 of FIG. 2 or FIG. 3, and overlapping descriptions are omitted below.

In an embodiment, the first support structure 220 may be provided with at least a portion thereof in a flat plate shape. For example, the first support structure 220 may be formed of a conductive material and/or a non-conductive material (e.g., polymer). In case that the first support structure 220 at least partially includes a conductive material such as metal, the side bezel structure 222 or a portion of the first support structure 220 may function as an antenna. The first support structure 220 may include two surfaces facing opposite directions. The display 201 may be disposed on one surface of the two surfaces of the first support structure 220, and the board assembly 240 may be disposed on the other surface. In an embodiment, the first support structure 220 may include a 1-1th support structure 221 disposed over an upper portion and a lower portion of the electronic device 101, and a 1-2th support structure 222 disposed at an upper portion of the electronic device 101.

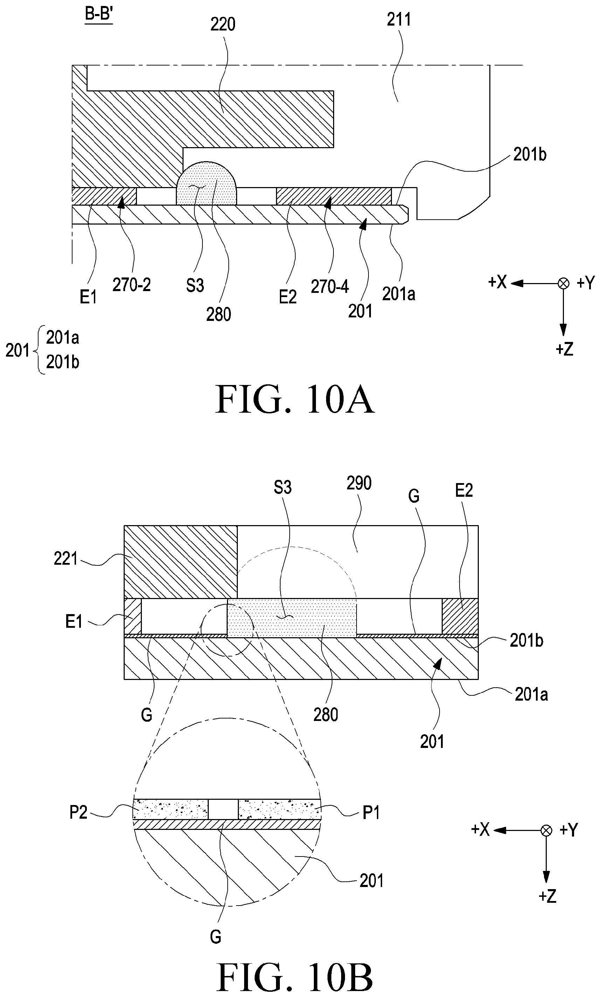

In an embodiment, the rear plate 211 may be provided with at least a portion thereof in a flat plate shape. In an embodiment, the rear plate 211 may include a second support structure 211a at least partially facing the first support structure 220, and a side structure 211b disposed at an edge of the second support structure 211a. In the disclosure, the first support structure 220 and the second support structure 211a may be referred to together as "support structure". For example (see FIGS. 10A and 10B), the first support structure 220 and the second support structure 211a may include a structure at least partially overlapping each other or coupled with each other.

For example, the second support structure 211a and the side structure 211b may be integrally formed as a single member. For example, the rear plate 211 may be formed of a conductive material and/or a non-conductive material (e.g., polymer). In case that the rear plate 211 at least partially includes a conductive material such as metal, a portion of the rear plate 211 may function as an antenna.

According to an embodiment, the first support structure 220 and the rear plate 211 may be combined and referred to as a housing. According to an embodiment, the housing may be generally understood as a structure for receiving, protecting, or disposing electrical/electronic components such as the board assembly 240 or the battery 260. In an embodiment, the housing is a structure that a user may visually or tactilely perceive from an exterior of the electronic device 101, and in an embodiment, a front surface or a rear surface of the housing may refer to the first surface 210A of FIG. 2 or the second surface 210B of FIG. 3. In an embodiment, the first support structure 220 is disposed between the front plate 202 (e.g., the first surface 210A of FIG. 2) and the rear plate 211 (e.g., the second surface 210B of FIG. 3), and may function as a structure for disposing electrical/electronic components such as the board assembly 240.

According to an embodiment, a circuit device (e.g., a processor), a communication module (e.g., the communication module 190 of FIG. 1), a power management module (e.g., the power management module 188), or memory (e.g., the memory 130 of FIG. 1), an interface (e.g., the interface 177 of FIG. 1), or various electrical/electronic components implemented in an integrated circuit chip form may be disposed on the board assembly 240. A processor (e.g., the processor 120 of FIG. 1) may include one or more of a central processing unit, an application processor, a graphics processing unit, an image signal processor, a sensor hub processor, or a communication processor. The memory may include, e.g., a volatile memory or a non-volatile memory. According to an embodiment, the interface may include, e.g., a high definition multimedia interface (HDMI), a universal serial bus (USB) interface, an SD card interface, or an audio interface. The interface may, e.g., electrically or physically connect the electronic device 101 to an external electronic device, and may include a USB connector, an SD card/MMC connector, or an audio connector. According to an embodiment, the board assembly 240 may be provided with an electromagnetic shielding environment from the rear case 250.

According to an embodiment, the battery 260 is a device for supplying power to at least one component of the electronic device 101, and may include, e.g., a non-rechargeable primary cell, or a rechargeable secondary cell, or a fuel cell. At least a portion of the battery 260 may be disposed on, e.g., substantially the same plane as the board assembly 240. The battery 260 may be integrally disposed inside the electronic device 101, or may be detachably disposed with respect to the electronic device 101.

According to an embodiment, the rear case 250 may include an upper rear case 250a and a lower rear case 250b. In an embodiment, the upper rear case 250a may be disposed to surround the board assembly 240 (e.g., the first circuit board 240a) together with a portion of the first support structure 220. For example, the upper rear case 250a may be disposed to face the first support structure 220 with the first circuit board 240a interposed therebetween.

According to an embodiment, the lower rear case 250b may be utilized as a structure capable of disposing various electrical/electronic components including an interface (e.g., a USB connector, an SD card/MMC connector, or an audio connector). According to an embodiment, electrical/electronic components such as an interface (e.g., a USB connector, an SD card/MMC connector, or an audio connector) may be disposed on an additional printed circuit board not illustrated. In this case, the lower rear case 250b may be disposed to surround an additional printed circuit board (not illustrated) together with another portion of the first support structure 220. For example, an interface disposed on an additional printed circuit board (not illustrated) or the lower rear case 250b may be disposed to correspond to the sound hole 207 or the connector hole 208, 209 of FIG. 2.

According to an embodiment, the antenna (not illustrated) may include, e.g., a conductor pattern implemented on a surface of the rear case 250 through a laser direct structuring process. In an embodiment, the antenna may include a printed circuit pattern formed on a surface of a thin film, and the antenna in the form of a thin film may be disposed between the rear plate 211 and the battery 260. The antenna may include, e.g., a near field communication (NFC) antenna, a wireless charging antenna, and/or a magnetic secure transmission (MST) antenna. The antenna may, e.g., perform short-range communication with an external device or wirelessly transmit/receive power required for charging. In an embodiment, another antenna structure may be formed by a portion of the first support structure 220 and/or the side bezel structure 222, or a combination thereof.

According to an embodiment, the camera module (not illustrated) may be disposed on a portion of the first support structure 220 at a position adjacent to the board assembly 240. In an embodiment, the camera module may be at least partially surrounded by the rear case 250 (e.g., the upper rear case 250a). According to an embodiment, the camera module may receive at least a portion of light incident through an optical hole or a cover window 232, 233 disposed on a rear surface (e.g., the second surface 210B of FIG. 3) of the electronic device 101 from an interior of the electronic device 101.

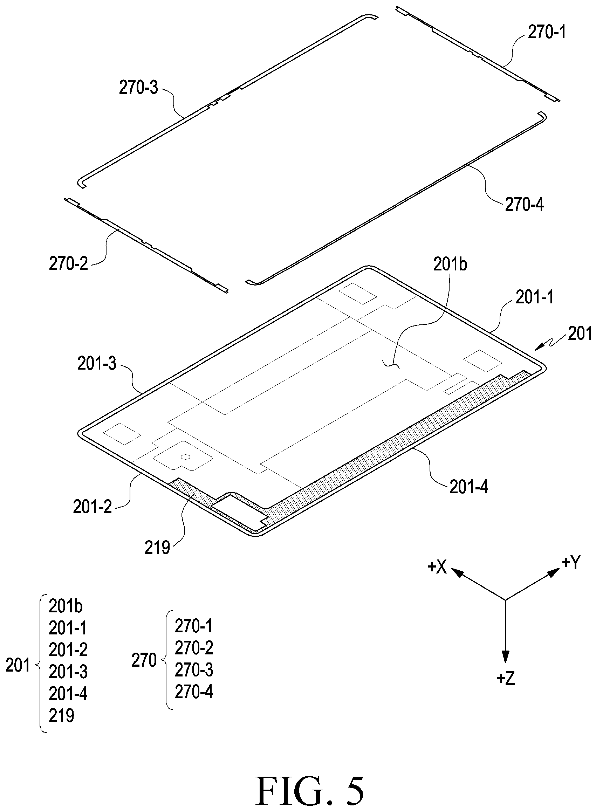

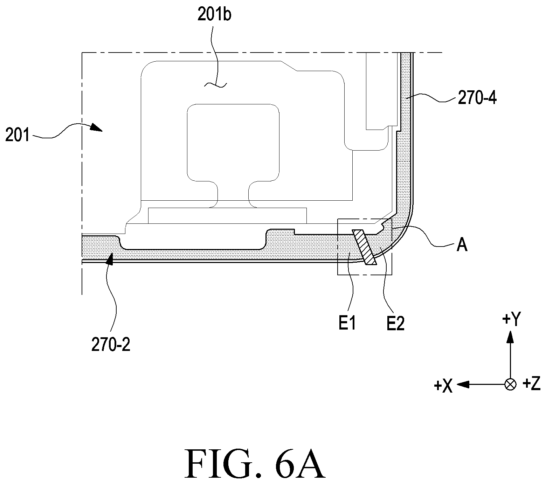

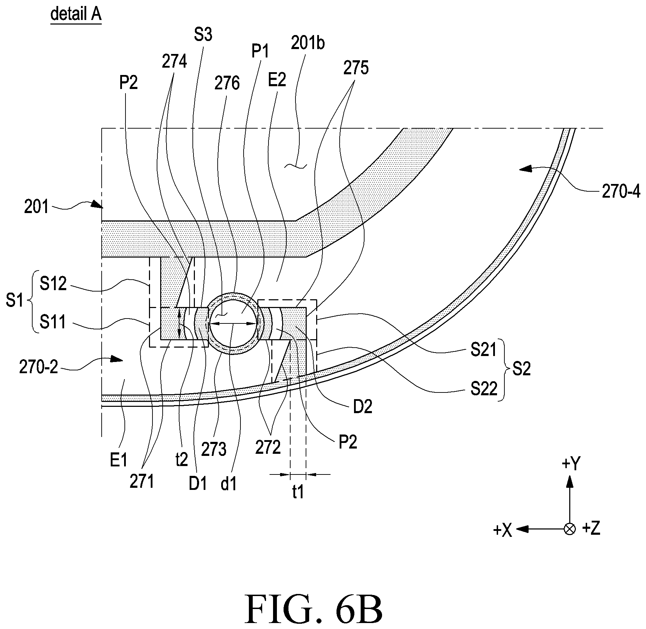

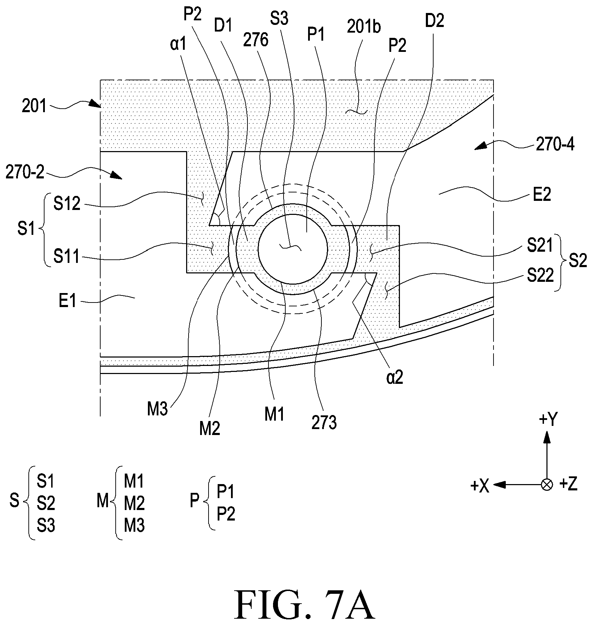

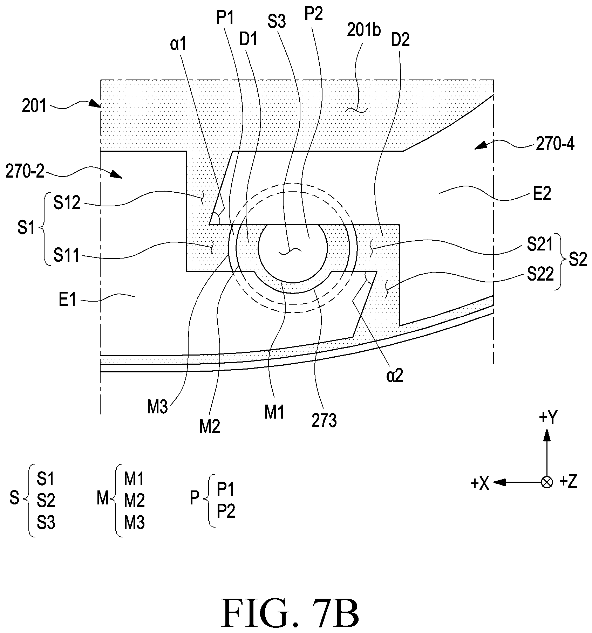

FIG. 5 is an exploded perspective view illustrating a rear surface of a display and adhesive tapes according to an embodiment of the disclosure. FIG. 6A is a rear view illustrating a rear surface of a display and adhesive tapes disposed thereon according to an embodiment of the disclosure. FIG. 6B is an enlarged view illustrating portion A of FIG. 6A illustrating a rear surface of a display on which a fiducial mark and adhesive tapes are disposed according to an embodiment of the disclosure. FIG. 7A is a view illustrating a rear surface of a display on which a guide mark and adhesive tapes are disposed according to an embodiment of the disclosure. FIG. 7B is a view illustrating a rear surface of a display on which a guide mark and adhesive tapes are disposed according to an embodiment of the disclosure.

According to an embodiment, an electronic device (e.g., the electronic device 101 of FIGS. 1 to 4) may include a housing (e.g., the housing 210 of FIGS. 2 to 4), a display 201, a plurality of adhesive tapes 270, and an adhesive material 280.

According to an embodiment, a housing (e.g., the housing 210 of FIGS. 2 to 4) forms an exterior of the electronic device 101, and may include a first support structure (e.g., the first support structure 220 of FIG. 4, FIGS. 10A and 10B) disposed inside the electronic device 101 and a rear plate (e.g., the rear plate 211 of FIGS. 3 and 4). The second support structure 211a of FIG. 4 may be included. According to an embodiment, the first support structure 220 and the rear plate 211 may be combined and referred to as a housing. In an embodiment, the rear plate 211 may include a second support structure (e.g., the second support structure 211a of FIG. 4) at least partially facing the first support structure 220. In the disclosure, the first support structure 220 and the second support structure 211a may be referred to together as "support structure". For example (see FIGS. 10A and 10B), the first support structure 220 and the second support structure 211a may include a structure at least partially overlapping each other or coupled with each other.

According to an embodiment, the display 201 may include a first surface 201a (or front surface) visually exposed to an outside of the electronic device 101 and a second surface 201b (or rear surface) opposite to the first surface 201a. The second surface 201b may face a support structure (e.g., the first support structure 220 of FIG. 4 and the first support structure 220 of FIGS. 10A and 10B).

According to an embodiment, the display 201 may further include a display panel and a flexible circuit board 219 that electrically connects the display panel to a main circuit board (e.g., the board assembly 240 of FIG. 4) of the electronic device 101 and faces the second surface 201b. According to an embodiment, the flexible circuit board 219 may extend from the first side end 201-3 or the second side end 201-4 of the display 201. However, a position of the flexible circuit board 219 is not limited, and as an example, the flexible circuit board 219 may be disposed to face the second surface 201b and may extend from the upper end 201-1 or the lower end 201-2 of the display 201.

According to an embodiment, the plurality of adhesive tapes 270 may be disposed along an edge of the display 201 on the second surface 201b of the display 201. The plurality of adhesive tapes 270 may couple the second surface 201b to a support structure (e.g., the first support structure 220 of FIG. 4, FIGS. 10A and 10B and/or the second support structure 211a of FIG. 4). For example, the adhesive tapes 270 may be formed such that one surface in contact with the display 201 and an opposite surface in contact with the support structure 211a and/or 220 have adhesive force. For example, the adhesive material 280 may be an adhesive member that is applied in a gel or liquid form and then cured.

Referring to FIG. 5, according to an embodiment, the display 201 (or an edge of the display 201) may include an upper end 201-1 and a lower end 201-2 parallel to each other, and a first side end 201-3 and a second side end 201-4 connecting between the upper end 201-1 and the lower end 201-2 and parallel to each other.

According to an embodiment, the plurality of adhesive tapes 270 may include a plurality of adhesive tapes 270-1, 270-2, 270-3, 270-4 disposed on the second surface 201b. According to an embodiment, the plurality of adhesive tapes 270 may include a first adhesive tape 270-1 disposed along the upper end 201-1 of the display 201, a second adhesive tape 270-2 disposed along the lower end 201-2 of the display 201, a third adhesive tape 270-3 disposed along the first side end 201-3 of the display 201, and a fourth adhesive tape 270-4 disposed along the second side end 201-4 of the display 201.

In the disclosure, two adjacent adhesive tapes 270 are described by way of example with the second adhesive tape 270-2 and the fourth adhesive tape 270-4, but such description may be equally applied to other adjacent adhesive tapes, such as the first adhesive tape 270-1 and the third adhesive tape 270-3, or the first adhesive tape 270-1 and the fourth adhesive tape 270-4, or the second adhesive tape 270-2 and the third adhesive tape 270-3.

Referring to FIGS. 6A and 6B, according to an embodiment, each of two adjacent adhesive tapes (e.g., the second adhesive tape 270-2 and the fourth adhesive tape 270-4) of the plurality of adhesive tapes 270 may include a first end portion E1 and a second end portion E2 facing each other. The two adjacent adhesive tapes 270-2, 270-4 may be spaced apart from each other such that a separation area S is formed between the first end portion E1 and the second end portion E2.

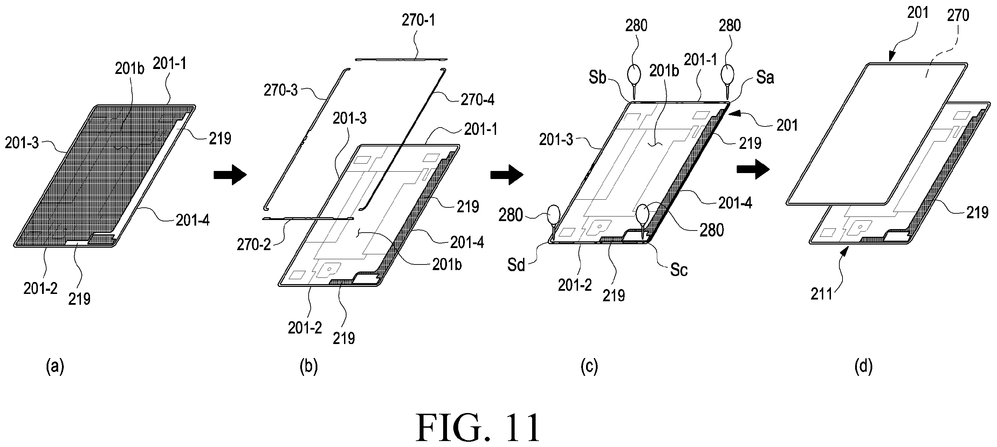

According to an embodiment, the separation area S formed between the plurality of adhesive tapes 270 may include a first separation area (e.g., Sa in FIG. 11) formed between the first adhesive tape 270-1 and the third adhesive tape 270-3, a second separation area (e.g., Sb in FIG. 11) formed between the first adhesive tape 270-1 and the fourth adhesive tape 270-4, a third separation area (e.g., Sc in FIG. 11) formed between the second adhesive tape 270-2 and the third adhesive tape 270-3, and a fourth separation area (e.g., Sd in FIG. 11) formed between the second adhesive tape 270-2 and the fourth adhesive tape 270-4.

According to an embodiment, the separation area S may be disposed along a side on the second surface 201b of the display 201 where the flexible circuit board 219 is not located. For example, in case that the flexible circuit board 219 extends from the first side end 201-3 or the second side end 201-4 of the display 201, the first separation area (e.g., Sa in FIG. 11) and the second separation area (e.g., Sb in FIG. 11) may be disposed closer to the upper end than the first side end 270-3 or the second side end 270-4. Similarly, e.g., in case that the flexible circuit board 219 extends from the first side end 201-3 or the second side end 201-4 of the display 201, the third separation area (e.g., Sc in FIG. 11) and the fourth separation area (e.g., Sd in FIG. 11) may be disposed closer to the lower end 270-2 than the first side end 270-3 or the second side end 270-4. For example, in case that the flexible circuit board 219 extends from the upper end 201-1 or the lower end 201-2 of the display 201, the first separation area (e.g., Sa in FIG. 11) and the second separation area (e.g., Sb in FIG. 11) may be disposed closer to the upper end 201-1 than the first side end 270-3 or the second side end 270-4. Similarly, e.g., in case that the flexible circuit board 219 extends from the upper end 201-1 or the lower end 201-2 of the display 201, the third separation area (e.g., Sc in FIG. 11) and the fourth separation area (e.g., Sd in FIG. 11) may be disposed closer to the lower end 270-2 than the first side end 270-3 or the second side end 270-4. However, a position of the separation area S is not limited, and may be set regardless of a position of the flexible circuit board 219 as an example.

Referring to FIGS. 6B to 7B, according to an embodiment, the separation area S may be formed to include an application area S3 and overflow prevention areas S1, S2 extending from one side and an opposite side of the application area S3 and connected to a periphery of the separation area S. Referring to FIGS. 6B to 7B, according to an embodiment, the first end portion E1 and the second end portion E2 may together surround (or define or form) the application area S3 and the overflow prevention areas S1, S2.

Referring to FIGS. 6B to 7B, according to an embodiment, the first end portion E1 and/or the second end portion E2 may include a notch 273, 276 surrounding (or defining or forming) the application area S3. The notch 273, 276 may be disposed in a central portion of the separation area S. An adhesive material 280 may be disposed in the application area S3, and a shape and a size of the application area S3 may be changed according to design factors such as a type, an adhesive force, and an amount of the adhesive material 280. Referring to FIGS. 6B and 7A, according to an embodiment, the first end portion E1 may include a first notch 273 and the second end portion E2 may include a second notch 276. Referring to FIG. 7B, according to an embodiment, the first end portion E1 may not include a notch, and the second end portion E2 may include a second notch 276. However, a position or a number of the notch 273, 276 is not limited, and for example, the second end portion E2 may not include a notch, and the first end portion E1 may include a first notch 273.

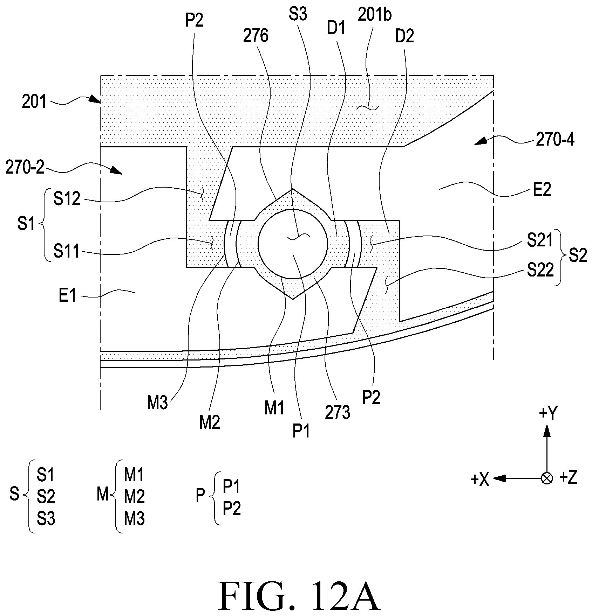

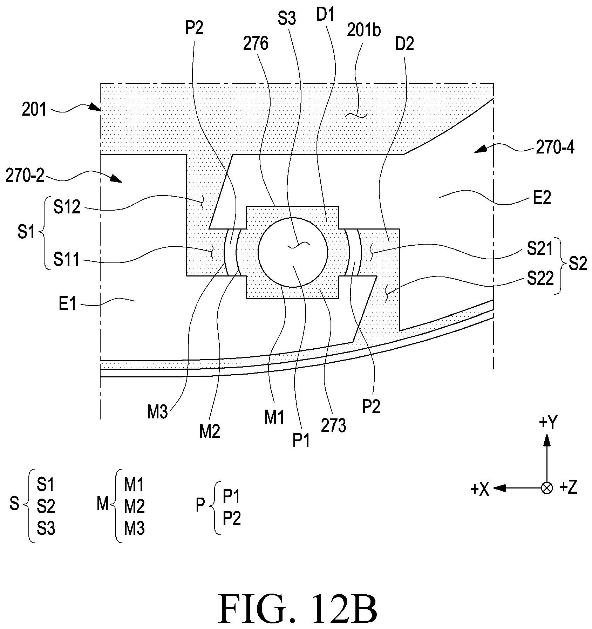

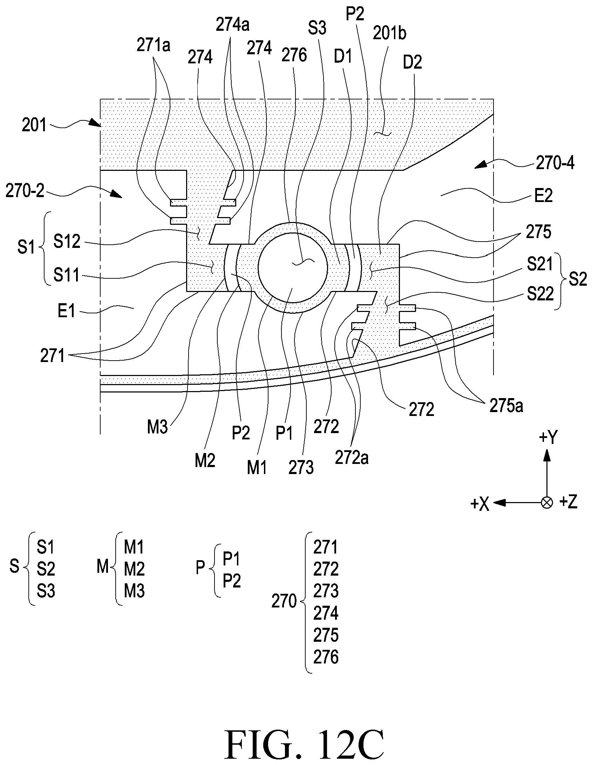

According to an embodiment, the notch 273, 276 may include a curve and may be, e.g., in an arc shape. For example, the application area S3 defined or formed by the notch 273, 276 may be circular or elliptical. However, shapes of the notch 273 and the application area S3 are not limited. According to an embodiment, the notch 273, 276 may include a curve and/or a straight line (see FIGS. 12A, 12B, and 12C). For example, a shape of the application area S3 defined or formed by the notch 273, 276 may be circular, polygonal, or irregular (see FIGS. 12A, 12B, and 12C).

Referring to FIGS. 6B to 7B, according to an embodiment, a portion 271, 272 of the first end portion E1 and a portion 273, 274 of the second end portion E2 may together define or form the overflow prevention areas S1, S2. According to an embodiment, the overflow prevention areas S1, S2 may receive the adhesive material 280 so that the adhesive material 280 does not overflow beyond the separation area S to a periphery of the separation area S.

According to an embodiment, the overflow prevention areas S1, S2 may be formed with a structure (e.g., a bottleneck structure) for limiting an inflow of the adhesive material 280 from the application area S3 to the overflow prevention areas S1, S2 or a movement of the inflowed adhesive material 280 to a periphery of the separation area S.

Referring to FIGS. 6B to 7B, according to an embodiment, the overflow prevention areas S1, S2 may include a first section S11, S21 extending from the application area S3 and a second section S12, S22 extending from the first section S11, S21 to form a predetermined angle (e.g., a first angle α1, a second angle α2 in FIGS. 7A and 7B) with the first section S11, S21 and open to a periphery of the separation area S. For example, the first overflow prevention area S1 may include a 1-1th section S11 extending from the application area S3 in a first direction (e.g., +X direction) and a 2-1th section S12 extending from the 1-1th section S11 to form a predetermined angle (e.g., the first angle α1 of FIG. 7A) with the 1-1th section S11 and open to a periphery of the separation area S. For example, a direction in which the 2-1th section S12 extends may intersect the first direction. For example, the second overflow prevention area S2 may include a 1-2th section S21 extending from the application area S3 in a second direction (e.g., -X direction) different from the first direction and a 2-2th section S22 extending from the 1-2th section S21 to form a predetermined angle (e.g., the second angle α2 in FIG. 7B) with the 1-2th section S21 and open to a periphery of the separation area S. For example, the second direction in which the 1-2th section S21 extends may be opposite to the first direction. For example, a direction in which the 2-2th section S22 extends may intersect the second direction. For example, a direction in which the 2-2th section S22 extends may be opposite to a direction in which the 2-1th section S12 extends. As an example, the first angle α1 may be substantially the same as the second angle α2. As an example, the first angle α1 may be different from the second angle α2. For example, the first angle α1 may be about 30 degrees or more and about 80 degrees or less, or about 45 degrees or more and about 70 degrees or less. For example, the second angle α2 may be about 30 degrees or more and about 80 degrees or less, or about 45 degrees or more and about 70 degrees or less.

Referring to FIG. 6B, according to an embodiment, the overflow prevention areas S1, S2 may be formed such that a width of the second section S12, S22 increases as it gets farther away from the first section S11, S21. According to an embodiment, a smallest portion of a width (e.g., a width in the X--axis direction) of the second section S12, S22 may be a width of a portion closest to the first section S11, S21 (e.g., the first width t1 of FIG. 6B). According to an embodiment, a width of the first section S11, S21 (e.g., the second width t2 in FIG. 6B) may be larger than a width of a smallest portion of a width (e.g., a width in the X--axis direction) of the second section S12, S22 closest to the first section S11, S21 (e.g., the first width t1 of FIG. 6B). For example, the second width t2 may be about 4 times, about 3 times or more, or about 2 times or more the first width t1. As an example, the first width t1 may be about 0.3 mm and the second width t2 may be about 0.6 mm, which is 2 times the first width t1.

According to an embodiment, by providing the overflow prevention area S1, S2 having a structure (e.g., a bottleneck structure) in which the first width t1 is smaller than the second width t2, when the support structure 211a and/or 220 is pressed toward and coupled to the second surface 201b in a state in which the adhesive tapes 270 and the adhesive material 280 are disposed on the second surface 201b of the display 201, a phenomenon in which the adhesive material 280 escapes to a periphery of the separation area S due to pressure may be decreased, and a defect (e.g., lifting between the display 201 and the support structure 211a and/or 220) due to escape of the adhesive material 280 may be decreased or prevented.

According to an embodiment, the first end portion E1 and the second end portion E2 may include a first portion 271 and a third portion 274 forming a first overflow prevention area S1 connected to one side of the application area S3 of the separation area S. According to an embodiment, the first end portion E1 and the second end portion E2 may include a second portion 272 and a fourth portion 274 forming a second overflow prevention area S2 connected to an opposite side of the application area S3 of the separation area S. According to an embodiment, the first portion 271 of the first end portion E1 and the third portion 274 of the second end portion E2 may be formed such that the first overflow prevention area S1 includes a 1-1th section S11 extending from the application area S3 in a first direction (e.g., +X--axis direction) and a 2-1th section S12 extending at least partially from the 1-1th section s11 in a third direction (e.g., +Y direction) intersecting the first direction. According to an embodiment, the first portion 271 of the first end portion E1 and the third portion 274 of the second end portion E2 may be formed such that the second overflow prevention area S2 includes a 1-2th section S21 extending from the application area S3 in a second direction (e.g., -X direction) opposite to the first direction and a 2-2th section S22 extending at least partially from the 1-2th section S21 in a fourth direction (e.g., - Y direction) intersecting the second direction.

According to an embodiment, the display 201 may include a first fiducial mark P1 formed in at least a portion of the application area. According to an embodiment, the display 201 may further include a second fiducial mark P2 formed around the first fiducial mark P1 and spaced apart from the first fiducial mark P1. A first area D1 may be formed between them. According to an embodiment, a first area D1 may be formed between the first fiducial mark P1 and the second fiducial mark P2. An area around the second fiducial mark P2 may be referred to as a second area D2.

For example, a bonding device used in a process of manufacturing the electronic device 101 includes an optical device, and may acquire an image of the first fiducial mark P1, the second fiducial mark P2, the first area D1, and/or the second area D2 through the optical device. For example, in the acquired image, the first fiducial mark P1 may be recognized by the bonding device because a surface roughness of the first fiducial mark P1 and the first area D1 is different. For example, in the acquired image, the second fiducial mark P2 and/or the first fiducial mark P1 may be recognized by the bonding device because a surface roughness of the second fiducial mark P2 and the first area D1 and/or the second area D2 is different.

For example, the first fiducial mark P1 may be identified or recognized by the bonding device because the first fiducial mark P1 and the first fiducial mark P1 are contrasted in brightness with the first area D1. For example, the second fiducial mark P2 and/or the first fiducial mark P1 may be identified or recognized by the bonding device because the second fiducial mark P2 is contrasted in brightness with the first area D1 and/or the second area D2. For example, by further including the second fiducial mark P2, recognition accuracy of a position of the first fiducial mark P1 by the bonding device may be enhanced compared to a case where the second fiducial mark P2 is not included. For example, a surface roughness and/or a height (e.g., a height in the Z--axis direction) of the first fiducial mark P1 and the second fiducial mark P2 may be different from each other, or may be substantially the same.

Referring to FIG. 7A, according to an embodiment, the display 201 may further include a guide mark M formed on the second surface 201b. The adhesive tapes 270 may be disposed along the guide mark M. Referring to FIG. 7A, e.g., at least a portion of the guide mark M may define or indicate an area of the fiducial mark P. For example, the guide mark M may include a first guide mark M1 that is a boundary of the first fiducial mark P1. For example, the guide mark M may include a second guide mark M2 and a third guide mark M3 that are boundaries of the second fiducial mark P2. For example, the guide mark M may further include a mark formed on the second surface 201b of the display 201 having a shape corresponding to a shape of at least a portion (e.g., the first end portion E1 and the second end portion E2) of the adhesive tapes 270 (e.g., the second adhesive tape 270-2 and the fourth adhesive tape 270-4). For example, the first guide mark M1 may be formed to help the adhesive tapes 270 to be disposed at a correct position on the second surface 201b of the display 201. For example, a shape of the notch 273 and/or 276 of the first end portion E1 and/or the second end portion E2 may correspond to a shape of the guide mark M. The guide mark M may help the adhesive tape 270 to be disposed at a correct position on the second surface 201b of the display 201, thereby reducing or preventing eccentricity of the adhesive tape 270.

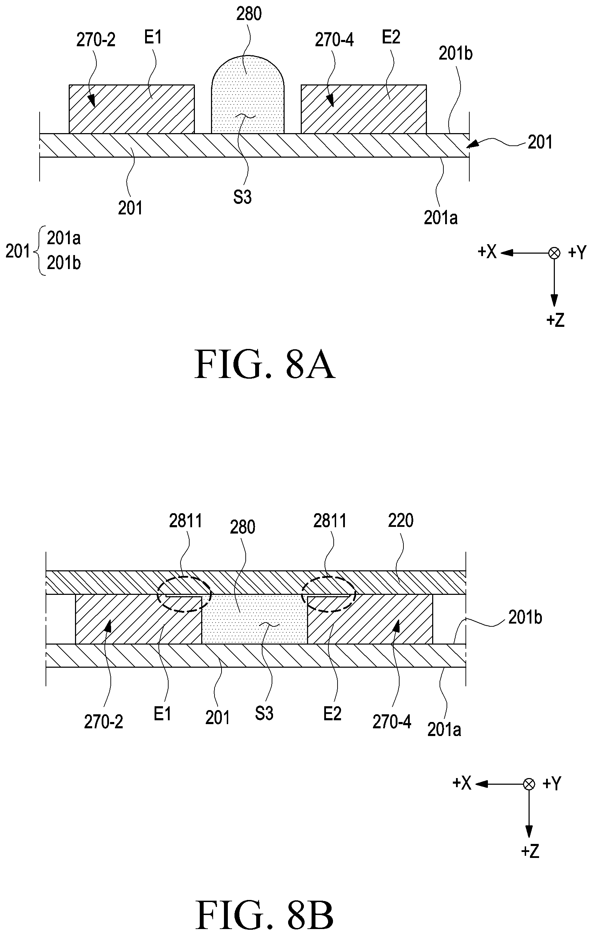

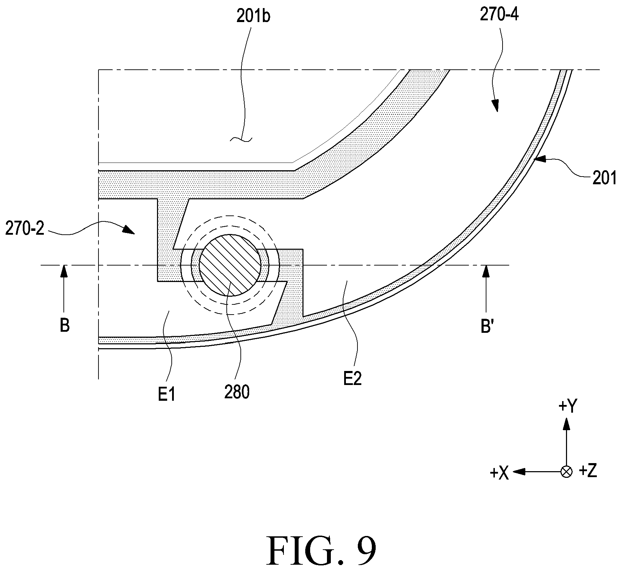

FIG. 8A is a side view illustrating a state in which an adhesive material is disposed in an application area between adhesive tapes according to an embodiment of the disclosure. FIG. 8B is a side view illustrating a state in which an adhesive tape and an adhesive material are covered with a support structure according to an embodiment of the disclosure. FIG. 9 is a rear view illustrating end portions of adhesive tapes disposed on a rear surface of a display and an adhesive material according to an embodiment of the disclosure. FIG. 10A is a side cross-sectional view taken along line B-B' of FIG. 9 according to an embodiment of the disclosure. FIG. 10B is a side cross-sectional view taken along line B-B' of FIG. 9 illustrating a black layer and a fiducial mark formed on a rear surface of a display according to an embodiment of the disclosure. FIG. 11 is views illustrating a process of bonding a rear surface of a display to an internal structure of an electronic device with an adhesive tape and an adhesive material according to an embodiment of the disclosure.

The display 201, the second adhesive tape 270-2, the fourth adhesive tape 270-4, and the adhesive material 280 of FIGS. 8A to 11 may be referred to as the display 201, the second adhesive tape 270-2, the fourth adhesive tape 270-4, and the adhesive material 280 of the embodiment of FIGS. 5 to 7B. The rear plate 211 of FIGS. 8A, 8B, 10A, and 10B may be referred to as the rear plate 211 of FIGS. 3 and 4. The descriptions of the embodiment of FIGS. 5 to 7B may be equally applied to the embodiment of FIGS. 8A to 10B.

Referring to FIG. 8A, according to an embodiment, an adhesive material 280 may be disposed on the second surface 201b of the display 201 in the application area S3 between the adhesive tapes 270 (e.g., the second adhesive tape 270-2, the fourth adhesive tape 270-4).

Referring to FIG. 8B, according to an embodiment, in a state in which the adhesive tapes 270 and the adhesive material 280 are completely disposed on the second surface 201b of the display 201, a support structure (e.g., the first support structure 220 of FIG. 4 and the first support structure 220 of FIGS. 10A and 10B) may be disposed on the adhesive tapes 270 and the adhesive material 280, and the support structure 211a and/or 220 may be pressed or compressed toward the display 201. The display 201 and the support structure 211a and/or 220 may be coupled to each other by the adhesive tapes 270 and the adhesive material 280. Referring to FIG. 8B, e.g., even if the adhesive material 280 includes a portion (e.g., indicated as 2811 of FIG. 8B) that has penetrated between the adhesive tapes 270 and the display 201, since the adhesive force of the adhesive material 280 replaces the adhesive surfaces of the adhesive tapes 270 that could not contact the support structure 211a and/or 220 due to the penetrated portion 2811, there may be no adverse effect on a coupling force or an adhesive force between the display 201 and the support structure 211a and/or 220.

FIG. 10A is a side cross-sectional view taken along B-B' of FIG. 9, and FIG. 10B may be a partially enlarged view illustrating FIG. 10A. In FIGS. 10A and 10B, the adhesive material 280 is conceptually illustrated in a state in which it is applied and not spread. Referring to FIG. 10A, the tapes 270-2, 270-4 and the adhesive material 280 may couple the second surface 201b of the display 201 to the support structure 211a and/or 220. Referring to FIG. 10B, according to an embodiment, the display 201 may further include a black layer G laminated, coated, formed, or disposed on the second surface 201b. For example, the fiducial mark P1, P2 may be laminated, coated, formed, or disposed on the black layer G2. For example, the black layer G may be formed such that an area where the fiducial mark P1, P2 is formed and an area where the fiducial mark P1, P2 is not formed are distinctively recognized by an equipment device used for assembly of the display 201 or application of the adhesive material 280. For example, the black layer G may be displayed in a first color (e.g., black), and the first fiducial mark P1 and the second fiducial mark P2 may be displayed in a second color (e.g., white) different from the first color.

Referring to (a) and (b) of FIG. 11, the plurality of adhesive tapes 270 may be disposed along an edge or an end portion 201-1, 201-2, 201-3, 201-4 of the display 201 on the second surface 201b of the display 201. Referring to (c) of FIG. 11, according to an embodiment, the separation area S formed between the plurality of adhesive tapes 270 may include a first separation area Sa formed between the first adhesive tape 270-1 and the third adhesive tape 270-3, a second separation area Sb formed between the first adhesive tape 270-1 and the fourth adhesive tape 270-4, a third separation area Sc formed between the second adhesive tape 270-2 and the third adhesive tape 270-3, and a fourth separation area Sd formed between the second adhesive tape 270-2 and the fourth adhesive tape 270-4. Referring to (c) of FIG. 11, an adhesive material 280 may be applied in the separation area S, and for example, the adhesive material 280 may be applied in a dot form at a central portion of the application area (e.g., application area S3 in FIGS. 10A and 10B). Referring to (d) of FIG. 11, according to an embodiment, in a state in which the adhesive tapes 270 and the adhesive material 280 are completely disposed on the second surface 201b of the display 201, a support structure (e.g., the first support structure 220 of FIG. 4 and the first support structure 220 of FIGS. 10A and 10B) may be disposed on the adhesive tapes 270 and the adhesive material 280, and the support structure 211a and/or 220 may be pressed or compressed toward the display 201. The display 201 and the support structure 211a and/or 220 may be coupled to each other by the adhesive tapes 270 and the adhesive material 280.

According to an embodiment, the separation area S may be disposed along a side on the second surface 201b of the display 201 where the flexible circuit board 219 is not located. For example, in case that the flexible circuit board 219 extends from the first side end 201-3 or the second side end 201-4 of the display 201, the first separation area (e.g., Sa in FIG. 11) and the second separation area (e.g., Sb in FIG. 11) may be disposed closer to the upper end than the first side end 270-3 or the second side end 270-4. Similarly, e.g., in case that the flexible circuit board 219 extends from the first side end 201-3 or the second side end 201-4 of the display 201, the third separation area (e.g., Sc in FIG. 11) and the fourth separation area (e.g., Sd in FIG. 11) may be disposed closer to the lower end 270-2 than the first side end 270-3 or the second side end 270-4. For example, in case that the flexible circuit board 219 extends from the upper end 201-1 or the lower end 201-2 of the display 201, the first separation area (e.g., Sa in FIG. 11) and the second separation area (e.g., Sb in FIG. 11) may be disposed closer to the upper end 201-1 than the first side end 270-3 or the second side end 270-4. Similarly, e.g., in case that the flexible circuit board 219 extends from the upper end 201-1 or the lower end 201-2 of the display 201, the third separation area (e.g., Sc in FIG. 11) and the fourth separation area (e.g., Sd in FIG. 11) may be disposed closer to the lower end 270-2 than the first side end 270-3 or the second side end 270-4. However, a position of the separation area S is not limited, and may be set regardless of a position of the flexible circuit board 219 as an example.

FIG. 12A is a view illustrating a rear surface of a display on which a fiducial mark and adhesive tapes are disposed according to an embodiment of the disclosure. FIG. 12B is a view illustrating a rear surface of a display on which a fiducial mark and adhesive tapes are disposed according to an embodiment of the disclosure. FIG. 12C is a view illustrating a rear surface of a display on which a fiducial mark and adhesive tapes are disposed according to an embodiment of the disclosure.

The display 201, the second adhesive tape 270-2, the fourth adhesive tape 270-4, and the separation area S of FIGS. 12A to 12C may be referred to as the display 201, the second adhesive tape 270-2, the fourth adhesive tape 270-4, and the separation area S of the embodiment of FIGS. 5 to 7B and FIGS. 8A to 11. The embodiment of FIGS. 5 to 11 may be combined with the embodiment of FIGS. 12A to 12C. The descriptions of the embodiment of FIGS. 5 to 11 may be equally applied to the embodiment of FIGS. 12A to 12C.

Referring to FIG. 12A, according to an embodiment, the first notch 273 of the first end portion E1 and/or the second notch 276 of the second end portion E2 may include a curve and may be irregular. A shape of the application area S3 defined or formed by the first notch 273 and/or the second notch 276 of the second end portion E2 may be irregular. Referring to FIG. 12B, according to an embodiment, the first notch 273 of the first end portion E1 and/or the second notch 276 of the second end portion E2 may include a straight line. A shape of the application area S3 defined or formed by the first notch 273 and/or the second notch 276 of the second end portion E2 may be polygonal. However, shapes of the notch 273, 276 and the application area S3 are not limited. For example, a shape of the first notch 273 and a shape of the second notch 276 may be different from each other, and as an example, the first notch 273 may include a curve and the second notch 276 may be formed only of straight lines.

Referring to FIG. 12C, according to an embodiment, the first portion 271 of the first end portion E1 and the third portion 274 of the second end portion E2 may include at least one groove expanded or recessed from the first overflow prevention area S1. For example, the first portion 271 of the first end portion E1 may include a plurality of first grooves 271a spaced apart from each other. For example, the third portion 274 of the second end portion E2 may include a plurality of third grooves 274a spaced apart from each other. For example, the first grooves 271a and the third grooves 274a may be disposed to face each other or to be offset from each other. Referring to FIG. 12C, according to an embodiment, the second portion 272 of the first end portion E1 and the fourth portion 275 of the second end portion E2 may include at least one groove expanded or recessed from the second overflow prevention area S2. For example, the second portion 272 of the first end portion E1 may include a plurality of second grooves 272a spaced apart from each other. For example, the fourth portion 275 of the second end portion E2 may include a plurality of fourth grooves 275a spaced apart from each other. For example, the second grooves 272a and the fourth grooves 275a may be disposed to face each other or to be offset from each other.

According to an embodiment of the disclosure, a bonding structure of a display to a support structure of an electronic device may be disclosed, in which a plurality of (e.g., four) straight adhesive tapes are disposed along an edge of the display on a rear surface of the display, and an adhesive material is disposed in a separation area between the adhesive tapes. According to this bonding structure, there is an advantage in that material loss is decreased in a process of manufacturing the adhesive tape compared to a conventional integrated adhesive member (e.g., a '□'shaped adhesive member), thereby reducing cost.

According to an embodiment of the disclosure, in a bonding structure of a display, adhesive tapes disposed with a separation area therebetween may be disposed on a rear surface of the display. Ends of the adhesive tapes may be formed to provide an application area in which an adhesive material is disposed in the separation area and an overflow prevention area that receives the adhesive material that has escaped from the application area due to external pressure. The application area may be disposed in a central portion of the separation area, and the overflow prevention area may extend from the application area. By providing such an overflow prevention area, when the support structure is pressed and coupled to the rear surface in a state in which the adhesive tapes and the adhesive material are disposed on the rear surface of the display, a phenomenon in which the adhesive material escapes to a periphery of the separation area due to the pressure may be decreased, and a defect (e.g., lifting between the display and the support structure) due to escape of the adhesive material may be decreased or prevented.

According to an embodiment of the disclosure, a guide mark is printed on a rear surface of a display to help an adhesive tape to be disposed at a correct position, thereby reducing or preventing eccentricity of the adhesive tape.

According to an embodiment of the disclosure, a waterproof and/or dustproof function of an electronic device may be provided by including adhesive tapes disposed on a rear surface of a display, an application area in which an adhesive material is disposed in a separation area between end portions of the adhesive tapes, and an overflow prevention area that receives the adhesive material that has escaped from the application area.

However, the problems to be solved by the disclosure are not limited to the above-mentioned problems, and may be variously extended within a scope not departing from the spirit and scope of the disclosure. Effects obtainable from the disclosure are not limited to the effects mentioned above, and various effects that may be directly or indirectly understood through the present document may be provided.

The electronic device including the adhesive tapes and the adhesive material of the disclosure described above is not limited by the above-described embodiments and drawings, and it will be apparent to those skilled in the art that various substitutions, modifications, and changes are possible within the technical scope of the disclosure.

According to an embodiment of the disclosure, an electronic device 101 may be provided. The electronic device may include a housing 210 forming an exterior of the electronic device and including a support structure 211a, 220 disposed inside the electronic device, a display 201 having a rectangular shape disposed in the housing and including a first surface 201a visually exposed to an outside of the electronic device and a second surface 201b which faces the support structure and is opposite to the first surface, a plurality of adhesive tapes 270 disposed along an edge of the display on the second surface and attaching the second surface to the support structure, and an adhesive material 280 disposed in the separation area. The plurality of adhesive tapes may be spaced apart from each other, and a separation area S may be formed between a first end portion E1 of one adhesive tape of the plurality of adhesive tapes and a second end portion E2 of another adhesive member facing the first end portion. At least one of the first end portion or the second end portion may include a notch 273, 276 disposed in a central portion of the separation area and surrounding an application area S3 in which the adhesive material is disposed. A portion 271, 272 of the first end portion and a portion 273, 274 of the second end portion may together form overflow prevention areas S1, S2 extending from one side and an opposite side of the application area S3 and configured to receive a portion of the adhesive material when the second surface of the display is attached to the support structure.

According to an embodiment, each of the overflow prevention areas may include a first section S11, S21 connected to the application area and a second section S12, S22 extending from the first section to form a predetermined angle with the first section and open toward a peripheral area of the separation area.

According to an embodiment, a width of the second section of the overflow prevention areas may increase as it gets farther away from the first section.

According to an embodiment, the first end portion may include a first portion 271, which defines a first overflow prevention area S1 connected to one side of the application area of the separation area, and a second portion 272, which defines a second overflow prevention area S2 connected to an opposite side of the application area of the separation area. The second end portion may include a third portion 274, which forms the first overflow prevention area S1 together with the first portion, and a fourth portion 274, which forms the second overflow prevention area S2 together with the second portion.

According to an embodiment, the display may further include a guide mark M formed on the second surface, and at least one of the plurality of adhesive tapes may be disposed along the guide mark.

According to an embodiment, the first end portion may include a first notch 273, and the second end portion may include a second notch 276 forming the application area together with the first notch.

According to an embodiment, a shape of the application area may be circular, polygonal, or irregular.

According to an embodiment, the display may include a first fiducial mark P1 formed in at least a portion of the application area.

According to an embodiment, the display may further include a black layer G disposed on the second surface, and the first fiducial mark may be formed on the black layer.

According to an embodiment, the display may further include a second fiducial mark P2 formed around the first fiducial mark and spaced apart from the first fiducial mark.

According to an embodiment, the display may include an upper end 201-1 and a lower end 201-2 parallel to each other, and a first side end 201-3 and a second side end 201-4 connecting between the upper end and the lower end and parallel to each other. The plurality of adhesive tapes may include a first adhesive tape 270-1 disposed along the upper end on the second surface, a second adhesive tape 270-2 disposed along the lower end on the second surface, a third adhesive tape 270-3 disposed along the first side end on the second surface, and a fourth adhesive tape 270-4 disposed along the second side end on the second surface.

According to an embodiment, the separation area may include a first separation area Sa formed between the first adhesive tape and the third adhesive tape, a second separation area Sb formed between the first adhesive tape and the fourth adhesive tape, a third separation area Sc formed between the second adhesive tape and the third adhesive tape, and a fourth separation area Sd formed between the second adhesive tape and the fourth adhesive tape.

According to an embodiment, the display may further include a flexible circuit board 219 extending from the first side end or the second side end and disposed to face the second surface. The first separation area and the second separation area may be disposed closer to the upper end than the first side end or the second side end, and the third separation area and the fourth separation area may be disposed closer to the lower end than the first side end or the second side end.

According to an embodiment, the display may further include a flexible circuit board 219 extending from the upper end or the lower end and disposed to face the second surface. The first separation area and the third separation area may be disposed closer to the first side end than the upper end or the lower end, and the second separation area and the fourth separation area may be disposed closer to the second side end than the upper end or the lower end.

According to an embodiment, the adhesive material may include a plurality of adhesive materials disposed in the first separation area, the second separation area, the third separation area, and the fourth separation area.

According to an embodiment of the disclosure, an electronic device 101 may be provided. The electronic device may include a housing 210 forming an exterior of the electronic device and including a support structure 211a, 220 disposed inside the electronic device, a display 201 having a rectangular shape disposed in the housing and including a first surface 201a visually exposed to an outside of the electronic device and a second surface 201b which faces the support structure and is opposite to the first surface, a plurality of adhesive tapes 270 disposed along an edge of the display on the second surface and attaching the second surface to the support structure, and an adhesive material 280 disposed in the separation area. The plurality of adhesive tapes may be spaced apart from each other, and a separation area S may be formed between a first end portion E1 of one adhesive tape of the plurality of adhesive tapes and a second end portion E2 of another adhesive member facing the first end portion. The first end portion and the second end portion may include a first notch 273 and a second notch 276, respectively, disposed in a central portion of the separation area and together surrounding an application area S3 in which the adhesive material is disposed.

According to an embodiment, a portion 271, 272 of the first end portion and a portion 273, 274 of the second end portion may together form overflow prevention areas S1, S2 extending from one side and an opposite side of the application area of the separation area and connected to a periphery of the separation area S.

According to an embodiment, each of the overflow prevention areas may include a first section S11, S21 connected to the application area and a second section S12, S22 extending from the first section to form a predetermined angle with the first section and open to a peripheral area of the separation area.

According to an embodiment, a width of the second section of the overflow prevention areas may increase as it gets farther away from the first section.

According to an embodiment, the first end portion may include a first portion 271, which forms a first overflow prevention area S1 connected to one side of the application area of the separation area, and a second portion 272, which forms a second overflow prevention area S2 connected to an opposite side of the application area of the separation area. The second end portion may include a third portion 274, which forms the first overflow prevention area S1 together with the first portion, and a fourth portion 274, which forms the second overflow prevention area S2 together with the second portion.

Although the disclosure has been illustrated and described with respect to an embodiment, it should be understood that the embodiment is for illustration and not for limiting the present invention. It will be apparent to those skilled in the art that various changes may be made in form and detail within the overall scope of the disclosure, including the appended claims and their equivalents.

An electronic device according to an embodiment of the disclosure may be one of various types of devices. An electronic device may include, e.g., a portable communication device (e.g., a smartphone), a computer device, a portable multimedia device, a portable medical device, a camera, a wearable device, or a home appliance. An electronic device according to an embodiment of the disclosure is not limited to the above-described devices.

An embodiment of the disclosure and terms used therein are not intended to limit the technical features described in the disclosure to a specific embodiment, and should be understood to include various modifications, equivalents, or substitutes of the corresponding embodiment. In connection to the description of drawings, similar reference numerals may be used for similar or related components. A singular form of a noun corresponding to an item may include one or more of the items unless the relevant context clearly indicates otherwise. In the disclosure, each of phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof. Terms such as "first" or "second" may be used simply to distinguish the corresponding component from another corresponding component and do not limit the corresponding components in other aspects (e.g., importance or order). When a predetermined (e.g., first) component is referred to as "coupled" or "connected" to another (e.g., second) component, with or without a term "functionally" or "communicatively," it may mean that the predetermined component may be connected to the other component directly (e.g., wiredly), wirelessly, or through a third component.

A term "module" used in an embodiment of the disclosure may include a unit implemented as hardware, software, or firmware, and may be used interchangeably with terms such as, e.g., logic, a logic block, a component, or a circuit. A module may be an integrally configured component or a minimum unit of the component or a component thereof that performs one or more functions. For example, according to an embodiment, a module may be implemented in the form of an application-specific integrated circuit (ASIC).

An embodiment of the disclosure may be implemented as software (e.g., a program 140) including one or more instructions stored in a storage medium (e.g., the internal memory 136 or an external memory 138) readable by a machine (e.g., the electronic device 101). For example, a processor (e.g., the processor 120) of the machine (e.g., the electronic device 101) may call at least one instruction among one or more instructions stored from the storage medium and execute the same. This enables the machine to be operated to perform at least one function according to the at least one instruction called. The one or more instructions may include code generated by a compiler or code executable by an interpreter. A machine-readable storage medium may be provided in the form of a non-transitory storage medium. Here, 'non-transitory' means only that the storage medium is a tangible device and does not include a signal (e.g., electromagnetic wave), and this term does not distinguish between a case in which data is semi-permanently stored in the storage medium and a case in which data is temporarily stored.

According to an embodiment, a method according to an embodiment of the disclosure may be included and provided in a computer program product. A computer program product may be traded between a seller and a buyer as a commodity. A computer program product may be distributed in the form of a machine-readable storage medium (e.g., compact disc read only memory (CD-ROM)), or may be distributed (e.g., downloaded or uploaded) online through an application store (e.g., Play Store^{™}) or directly between two user devices (e.g., smartphones). In case of online distribution, at least part of a computer program product may be at least temporarily stored or temporarily generated in a machine-readable storage medium, such as memory of a server of a manufacturer, a server of an application store, or a relay server.

According to embodiments, each component (e.g., a module or a program) of the above-described components may include a singular entity or a plurality of entities, and some of the plurality of entities may be separately disposed in another component. According to an embodiment, one or more components or operations among the above-described corresponding components may be omitted, or one or more other components or operations may be added. Alternatively or additionally, a plurality of components (e.g., a module or a program) may be integrated into a single component. In this case, the integrated component may perform one or more functions of each component of the plurality of components in a same or similar manner as performed by a corresponding component among the plurality of components before the integration. According to an embodiment, operations performed by a module, a program, or another component may be executed sequentially, in parallel, repetitively, or heuristically, or one or more of the operations may be executed in a different order, omitted, or one or more other operations may be added.

## Claims

1. An electronic device (101) comprising:
a housing (210) forming an exterior of the electronic device and including a support structure (211a, 220) disposed inside the electronic device;
a display (201) disposed in the housing and having a rectangular shape, the display including a first surface (201a) visually exposed to an outside of the electronic device and a second surface (201b) which faces the support structure and is opposite to the first surface;
a plurality of adhesive tapes (270) disposed along an edge of the display, on the second surface and attaching the second surface to the support structure, wherein the plurality of adhesive tapes are spaced apart from each other and a separation area (S) is formed between a first end portion (E1) of one adhesive tape of the plurality of adhesive tapes and a second end portion (E2) of another adhesive member facing the first end portion; and
an adhesive material (280) disposed in the separation area,
wherein at least one of the first end portion or the second end portion is disposed in a central portion of the separation area and includes a notch (273, 276) surrounding an application area (S3) in which the adhesive material is disposed, and
wherein a portion (271, 272) of the first end portion and a portion (273, 274) of the second end portion together form overflow prevention areas (S1, S2) extending from one side and an opposite side of the application area (S3) and configured to receive a portion of the adhesive material when the second surface of the display is attached to the support structure.

2. The electronic device of claim 1, wherein each of the overflow prevention areas includes a first section (S11, S21) connected to the application area and a second section (S12, S22) extending from the first section to form a predetermined angle with the first section and open toward a peripheral area of the separation area.

3. The electronic device of claim 2, wherein a width of the second section of the overflow prevention areas increases as it gets farther away from the first section.

4. The electronic device of any one of claims 1 to 3, wherein the first end portion includes a first portion (271), which defines a first overflow prevention area (S1) connected to one side of the application area of the separation area, and a second portion (272), which defines a second overflow prevention area (S2) connected to the opposite side of the application area of the separation area, and
wherein the second end portion includes a third portion (274), which forms the first overflow prevention area (S1) together with the first portion (271), and a fourth portion (274), which forms the second overflow prevention area (S2) together with the second portion (272).

5. The electronic device of any one of claims 1 to 4, wherein the display further includes a guide mark (M) formed on the second surface, and at least one of the plurality of adhesive tapes is disposed along the guide mark.

6. The electronic device of any one of claims 1 to 5, wherein the first end portion includes a first notch (273), and the second end portion includes a second notch (276) forming the application area together with the first notch.

7. The electronic device of claim 6, wherein a shape of the application area is circular, polygonal, or irregular.

8. The electronic device of any one of claims 1 to 7, wherein the display includes a first fiducial mark (P1) formed in at least a portion of the application area.

9. The electronic device of claim 8, wherein the display further includes a black layer (G) disposed on the second surface, and the first fiducial mark is formed on the black layer.

10. The electronic device of claim 8 or 9, wherein the display further includes a second fiducial mark (P2) formed around the first fiducial mark and spaced apart from the first fiducial mark.

11. The electronic device of any one of claims 1 to 10, wherein the display includes an upper end (201-1) and a lower end (201-2) that are parallel to each other, and a first side end (201-3) and a second side end (201-4) that are parallel to each other and connect between the upper end and the lower end, and
wherein the plurality of adhesive tapes includes a first adhesive tape (270-1) disposed along the upper end on the second surface, a second adhesive tape (270-2) disposed along the lower end on the second surface, a third adhesive tape (270-3) disposed along the first side end on the second surface, and a fourth adhesive tape (270-4) disposed along the second side end on the second surface.

12. The electronic device of claim 11, wherein the separation area includes a first separation area (Sa) formed between the first adhesive tape and the third adhesive tape, a second separation area (Sb) formed between the first adhesive tape and the fourth adhesive tape, a third separation area (Sc) formed between the second adhesive tape and the third adhesive tape, and a fourth separation area (Sd) formed between the second adhesive tape and the fourth adhesive tape.

13. The electronic device of claim 12, wherein the display further includes a flexible circuit board (219) extending from the first side end or the second side end and disposed to face the second surface, and
wherein the first separation area and the second separation area are disposed closer to the upper end than the first side end or the second side end, and the third separation area and the fourth separation area are disposed closer to the lower end than the first side end or the second side end.

14. The electronic device of claim 12, wherein the display further includes a flexible circuit board (219) extending from the upper end or the lower end and disposed to face the second surface, and
wherein the first separation area and the third separation area are disposed closer to the first side end than the upper end or the lower end, and the second separation area and the fourth separation area are disposed closer to the second side end than the upper end or the lower end.

15. The electronic device of claim 13 or 14, wherein the adhesive material includes a plurality of adhesive materials disposed in the first separation area, the second separation area, the third separation area, and the fourth separation area.
